# EUROPEAN PATENT APPLICATION

(11) **EP 4 722 154 A1**
(43) Date of publication of application: **08.04.2026**
(21) Application number: 23944180.1
(22) Date of filing: 31.10.2023
(51) Int. Cl.: C01B 32/194, C01B 32/198, C25B 1/135, C25B 1/50

(54) **SINGLE-LAYER EDGE-OXIDIZED GRAPHENE AND PREPARATION METHOD THEREFOR**

(30) Priority: 04.07.2023 CN 202310806922
(71) Applicant: Shenzhen Intrinsic Equation Graphene Technology Co., Ltd, Shenzhen, Guangdong 518000 (CN)
(72) Inventor: LIU, Jianhong, Shenzhen, Guangdong 518000 (CN); ZHANG, Qianling, Shenzhen, Guangdong 518000 (CN); PIAO, Jishou, Shenzhen, Guangdong 518000 (CN); ZHANG, Shengnan, Shenzhen, Guangdong 518000 (CN); ZHOU, Ting, Shenzhen, Guangdong 518000 (CN)
(74) Representative: Bryn Aarflot AS
(86) International application number: PCT/CN2023/128147
(87) International publication number: WO 2025/007459

(57) **Abstract**

Disclosed are a single-layer edge-oxidized graphene and a preparation method therefor, which belong to the technical field of graphene materials. A single-layer graphene is used as a raw material and electrolyzed by applying an ultra-low-frequency alternating current with a low current density to prepare the single-layer edge-oxidized graphene. The number of oxygen free radicals generated from an electrolyte is regulated and controlled by adjusting the current intensity and frequency of the applied alternating current, a small number of oxygen free radicals are reacted at the sites having more active binding energy of the edge of the single-layer graphene, and the low current intensity and the short current time result in insufficient invasion of generated oxygen radicals into the plane of the single-layer graphene, thereby constructing the single-layer edge-oxidized graphene. The polarity of the prepared single-layer edge-oxidized graphene is increased on the basis of retaining the excellent physical and chemical properties of graphene, thereby greatly improving the dispersing capability of the graphene in polar solvents.

## Description

The present application claims priority to Chinese Patent Application No. CN202310806922.0 filed with the China National Intellectual Property Administration (CNIPA) on July 04, 2023 and entitled "EDGE-OXIDIZED SINGLE-LAYER GRAPHENE AND PREPARATION METHOD THEREOF", which is incorporated herein by reference in its entirety.

### TECHNICAL FIELD

The present disclosure relates to the technical field of graphene materials, and in particular to an edge-oxidized single-layer graphene and a preparation method thereof.

### BACKGROUND

Graphene is a two-dimensional planar material with only a single layer of carbon atoms. On the plane of graphene, sp²-hybridized carbon atoms are densely arranged in a honeycomb lattice. Graphene can be curled into different shapes to form carbon nanotubes or fullerenes, and can also be continuously stacked to form three-dimensional graphite sheets.

Graphene has many excellent properties due to its special structure. Graphene is the hardest material discovered so far and has excellent mechanical properties (1,060 GPa), as well as a theoretical specific surface area reaching 2,600 m²·g⁻¹ and an outstanding thermal conductivity of up to 3,000 W·m⁻¹·K⁻¹. In addition, the graphene has desirable electrical conductivity with an electron mobility of up to 20,000 cm²·V⁻¹·s⁻¹ at room temperature.

Graphene is a two-dimensional planar material with a thickness of only one carbon atom, and has both an extremely large specific surface area and an extremely high surface activation energy. These factors make the graphene highly unstable and difficult to shape, thus restricting its further application in many fields. Therefore, the polarity of the graphene is greatly improved by introducing oxygen-containing functional groups such as hydroxyl and carbonyl groups on graphene sheets to prepare graphene oxide. At this time, the graphene can be stably dispersed in polar solutions while reducing its surface activation energy, such that the graphene can be directly processed and shaped using simple techniques to prepare different functional materials, such as graphene coatings, graphene paper, and graphene conductive films.

To date, the main methods for preparing graphene oxide include: (1) Strong oxidant oxidation method: In this method, graphene is oxidized by introducing strong acids and strong oxidants, such as concentrated sulfuric acid, potassium permanganate, and hydrogen peroxide. The advantage of this method is that a large number of oxygen-containing functional groups are introduced into the plane and edge of the graphene, thereby greatly improving the polarity and modifiability of the graphene. However, the introduction of the strong acids and strong oxidants destroys a two-dimensional planar structure of the graphene, causing a large number of defects on the graphene plane. Moreover, these defects are difficult to repair, making the graphene lose its original excellent physical and chemical properties. In addition, the introduction of strong acids causes pollution to the environment. (2) Direct current electrolysis method: In this method, multilayer graphite and a platinum metal sheet are used as a pair of electrolytic electrodes, and a voltage of 10 V is applied to generate a large number of hydroxyl free radicals in the electrolyte. These active hydroxyl free radicals react with the graphite, thereby introducing oxygen-containing functional groups on a surface of the graphite. Meanwhile, hydroxyl, bicarbonate and other ions in the electrolyte enter between the graphite sheets and undergo redox reactions under electrical conditions to generate gases such as carbon dioxide and oxygen, thereby physically peeling off the graphite layer by layer to generate graphene oxide. The advantage of this method is that it is environmentally friendly and can prepare graphene oxide quickly and safely. However, the disadvantage of this method is that the degree of oxidation is uncontrollable and further reduction is required, resulting in a large number of defects on the graphene plane and leading to a decrease in the optical, electrical, and thermal properties of the graphene. (3) Physical peeling method.: For example, mechanical ball milling method relies on the collision and friction between the grinding balls and graphene in a ball mill at high speed to grind multilayer graphene oxide to reduce the number of graphene layers. This method is simple, but it is difficult to control the uniformity of the number of the graphene oxide layers peeled off.

### SUMMARY

An object of the present disclosure is to provide an edge-oxidized single-layer graphene and a preparation method thereof. The prepared graphene is single-layer graphene with only edge oxidation, and has desirable water solubility and excellent comprehensive performances.

To achieve the above object, the present disclosure provides the following technical solutions:
The present disclosure provides a method for preparing an edge-oxidized single-layer graphene, including:
mixing a single-layer graphene, a binder, and a dispersant, and drying a resulting slurry to obtain an electrode plate; and
subjecting the electrode plate to electrolytic oxidation in an electrolytic cell to obtain the edge-oxidized single-layer graphene; wherein
the electrolytic oxidation is conducted under an ultra-low frequency alternating current having a frequency of 0.01 Hz to 0.02 Hz; and
the electrolytic oxidation is conducted at a current density of 30 mA·cm⁻² to 50 mA·cm⁻² for 50 s to 100 s.

In some embodiments, the binder is one or more selected from the group consisting of polyvinylidene fluoride (PVDF), naphthol, sodium alginate, styrene-butadiene rubber (SBR), and polyacrylic acid (PAA).

In some embodiments, the dispersant includes one or more selected from the group consisting of water, a polyethylene-propylene polymer, N-methylpyrrolidone (NMP), methanol, ethanol, ethylene glycol, propanol, methyl ether, ethyl ether, dimethyl carbonate (DMC), propylene carbonate (PC), diethyl carbonate (DEC), ethylene carbonate (EC), ethyl methyl carbonate, 2-(2-butoxyethoxy)ethyl acetate, butyl carbitol, diethylene glycol butylether acetate, 2,2,4-trimethyl-1,3-pentanediol monoisobutyrate, ethylene glycol acetic acid acetate, and terpineol.

In some embodiments, a dosage ratio of the single-layer graphene to the dispersant is in a range of (2-5) mg: (2-5) mL.

In some embodiments, a mass of the binder is 7 wt.% to 15 wt.% of a mass of the single-layer graphene.

In some embodiments, an electrolyte in an electrolyte solution for the electrolytic cell includes one or more selected from the group pool of potassium bicarbonate, potassium hydroxide, ammonium acetate, ammonium sulfate, lithium hexafluorophosphate, lithium hexafluoroborate, lithium hexafluoroarsenate, lithium bis(trifluoromethanesulphonyl)imide, and sodium hexafluorophosphate.

In some embodiments, a concentration of the electrolyte in the electrolyte solution is in a range of 0.05 mol·L⁻¹ to 0.5 mol·L⁻¹.

In some embodiments, the ultra-low frequency alternating current has the frequency of 0.017 Hz; and the electrolytic oxidation is conducted at the current density of 41.6 mA·cm⁻².

The present disclosure further provides an edge-oxidized single-layer graphene prepared by the method described in the above technical solutions, wherein the edge-oxidized single-layer graphene has a planar structure with a curled edge.

In some embodiments, the edge-oxidized single-layer graphene has a size of 20 nm to 100 nm and an edge height of 1.5 nm.

The present disclosure provides a method for preparing an edge-oxidized single-layer graphene. The edge-oxidized single-layer graphene is prepared by using single-layer graphene as a raw material, and conducting electrolysis by applying an ultra-low frequency alternating current with a relatively low current density. An amount of oxygen free radicals generated by the electrolyte is regulated by adjusting a current intensity and a frequency of the applied alternating current. A small amount of the oxygen free radicals can undergo a reaction from relatively-active binding energy sites at an edge of the single-layer graphene. A relatively low current intensity and a relatively short current time result in that the generated oxygen free radicals are insufficient to invade into a plane of the single-layer graphene, thereby constructing the edge-oxidized single-layer graphene.

In the present disclosure, the electrolysis is conducted under mild electrolysis conditions (ultra-low frequency alternating current and lower current density), such that the degree of oxidation and damage to the graphene are low. Therefore, the graphene sheet can retain a complete intrinsic structure and maintain various excellent properties of graphene to the greatest extent. Meanwhile, oxygen-containing functional groups (such as hydroxyl and ketocarbonyl) introduced at the edge endow the graphene with desirable water solubility. However, the mechanical, thermal, and electrical properties of graphene mainly depend on a single-layer structure of the graphene sheet and defects of a planar structure. The prepared edge-oxidized single-layer graphene is in a single-layer structure, and has polar oxidized functional groups existing at the edge. As a result, the prepared edge-oxidized single-layer graphene increases its polarity while maintaining the excellent physical and chemical properties of graphene, thereby greatly improving the dispersibility of graphene in polar solvents.

In the present disclosure, the method not only can adjust the oxidation degree of graphene oxide by adjusting the current intensity and frequency of the applied alternating current, thereby preparing the edge-oxidized single-layer graphene with a controllable oxidation degree, but also can solve the problem that the physical exfoliation is difficult to control the number of single-layer graphene oxide layers. The method for preparing the edge-oxidized single-layer graphene based on low-frequency alternating current is safe, simple, nonpolluting, and easy to operate.

### BRIEF DESCRIPTION OF THE DRAWINGS

FIG. 1 shows a flow chart of the method for preparing the edge-oxidized single-layer graphene according to an embodiment of the present disclosure.
FIG. 2 shows a photograph of the aqueous dispersion of the edge-oxidized single-layer graphene obtained before concentration in Example 1.
FIG. 3 shows a transmission electron microscopy (TEM) image of the edge-oxidized single-layer graphene prepared in Example 1.
FIG. 4 is a graph showing the atomic force microscope measurement of the edge thickness of the edge-oxidized single-layer graphene prepared in Example 1.
FIG. 5 shows a TEM image of the graphene oxide prepared by high-current electrolysis of graphene in Comparative Example 1.

### DETAILED DESCRIPTION OF THE EMBODIMENTS

The present disclosure provides a method for preparing an edge-oxidized single-layer graphene, including the following steps:
mixing a single-layer graphene, a binder, and a dispersant, and drying a resulting slurry to obtain an electrode plate; and
subjecting the electrode plate to electrolytic oxidation in an electrolytic cell to obtain the edge-oxidized single-layer graphene; wherein
the electrolytic oxidation is conducted under an ultra-low frequency alternating current having a frequency of 0.01 Hz to 0.02 Hz; and
the electrolytic oxidation is conducted at a current density of 30 mA·cm⁻² to 50 mA·cm⁻² for 50 s to 100 s.

In the present disclosure, unless otherwise specified, the materials or reagents used are all commercially available products well known to those skilled in the art.

In the present disclosure, a single-layer graphene, a binder, and a dispersant are mixed, and a resulting slurry is dried to obtain an electrode plate.

There is no specific limitation on the single-layer graphene, and any commercially available product known in the art may be used.

In some embodiments of the present disclosure, the binder is one or more selected from the group consisting of PVDF, naphthol, sodium alginate, SBR, and PAA; under the condition that the binder includes two or more of the above types, there is no specific limitation on the ratio of different types of the binders, which may be adjusted according to actual requirements. In the present disclosure, the single-layer graphene powder fixed by the binder will not fall off in pieces during the electrolysis.

In some embodiments of the present disclosure, the dispersant includes one or more selected from the group consisting of water, a polyethylene-propylene polymer, NMP, methanol, ethanol, ethylene glycol, propanol, methyl ether, ethyl ether, DMC, PC, DEC, EC, ethyl methyl carbonate, 2-(2-butoxyethoxy)ethyl acetate, butyl carbitol, diethylene glycol butylether acetate, 2,2,4-trimethyl-1,3-pentanediol monoisobutyrate, ethylene glycol acetic acid acetate, and terpineol; under the condition that the dispersant includes two or more of the above types, there is no specific limitation on the ratio of different types of the dispersants, which may be adjusted according to actual requirements.

In some embodiments of the present disclosure, a dosage ratio of the single-layer graphene to the dispersant is in a range of (2-5) mg: (2-5) mL, and preferably 3 mg: 5 mL.

In some embodiments of the present disclosure, a mass of the binder is 7 wt.% to 15 wt.%, and preferably 9 wt.% of a mass of the single-layer graphene.

There is no specific limitation on the mixing of the single-layer graphene, the binder, and the dispersant, and the raw materials may be mixed uniformly according to the processes well known in the art.

In some embodiments of the present disclosure, after the mixing of the single-layer graphene, the binder, and the dispersant is completed, the resulting slurry is poured into an electrode mold, and dried to obtain the electrode plate. There is no specific limitation on the electrode mold, and any electrode mold known in the art may be used. In some embodiments of the present disclosure, a rectangular mold with length, width, and height of 25 mm, 20 mm, and 2 mm, respectively, may be used.

There is no specific limitation on the drying, and the slurry may be dried according to the processes well known in the art.

In the present disclosure, after obtaining the electrode plate, the electrode plate is subjected to electrolytic oxidation in an electrolytic cell to obtain the edge-oxidized single-layer graphene.

In some embodiments of the present disclosure, the electrode plate is placed in the electrolytic cell, an electrolyte solution is added thereto such that the electrode plate is placed in the electrolyte solution, and positive and negative electrodes of an electrochemical workstation are connected to allow the electrolytic oxidation. There is no specific limitation on the electrochemical workstation and its positive and negative electrodes, and the corresponding equipments well known in the art may be used.

In some embodiments of the present disclosure, an electrolyte in an electrolyte solution for the electrolytic cell includes one or more selected from the group consisting of potassium bicarbonate, potassium hydroxide, ammonium acetate, ammonium sulfate, lithium hexafluorophosphate, lithium hexafluoroborate, lithium hexafluoroarsenate, lithium bis(trifluoromethanesulphonyl)imide, and sodium hexafluorophosphate; under the condition that the electrolyte includes two or more of the above types, there is no specific limitation on the ratio of different types of the electrolytes, which may be adjusted according to actual requirements.

In some embodiments of the present disclosure, a concentration of the electrolyte is in a range of 0.05 mol·L⁻¹ to 0.5 mol·L⁻¹, and preferably 0.2 mol·L⁻¹ in the electrolyte solution; and a solvent used for the electrolyte solution is water.

In some embodiments of the present disclosure, the electrolytic oxidation is conducted under an ultra-low frequency alternating current; the ultra-low frequency alternating current has a frequency of 0.01 Hz to 0.02 Hz, and preferably 0.017 Hz; the electrolytic oxidation is conducted at a current density of 30 mA·cm⁻² to 50 mA·cm⁻², and preferably 41.6 mA·cm⁻²; the electrolytic oxidation is conducted for 50 s to 100 s, and preferably 60 s. In the present disclosure, the electrolysis is conducted using an ultra-low frequency alternating current, and no excessive hydroxyl free radicals may be generated during the electrolysis, so that the oxidation only occurs at the relatively active sites at the edge of graphene, thereby preparing a single-layer graphene nanosheet in which the oxidation only occurs at the edge.

In some embodiments of the present disclosure, after the electrolytic oxidation is completed, a obtained product is added to deionized water, a resulting mixture is subjected to dialysis until a resulting aqueous solution is neutral, then to centrifugal separation, and a resulting upper layer solution is subjected to filtration (removing the residual electrolyte metal ions and precipitates in the solution), concentration (removing 95% of the water), and freeze-drying in sequence to obtain a nanosheet of the edge-oxidized single-layer graphene. In some embodiments of the prepsent disclosure, the centrifugal separation is conducted at 8,500 rpm for 3 min. There is no specific limitation on the filtration, concentration, and freeze-drying, which may be conducted according to the processes well known in the art.

The present disclosure further provides an edge-oxidized single-layer graphene prepared by the method described in the above technical solutions, wherein the edge-oxidized single-layer graphene has a planar structure with a curled edge. In the present disclosure, an edge of the prepared edge-oxidized single-layer graphene is curled due to the presence of oxygen-containing functional groups such as hydroxyl and ketocarbonyl groups at the edge of the planar structure.

In some embodiments of the present disclosure, the edge-oxidized single-layer graphene has a size of 20 nm to 100 nm and an edge height of 1.5 nm.

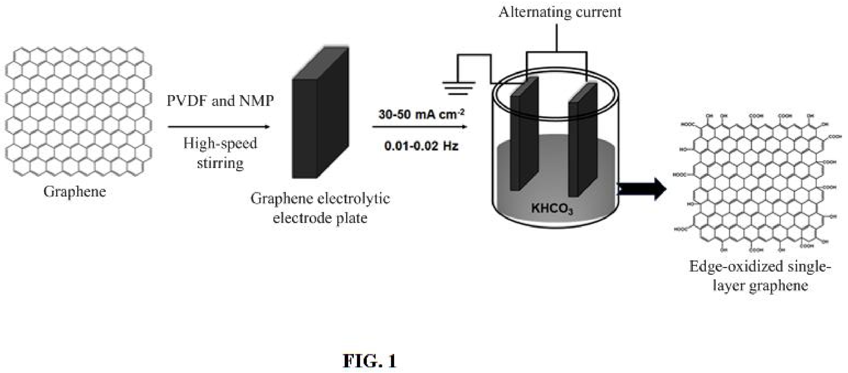

FIG. 1 shows a flow chart of the method for preparing the edge-oxidized single-layer graphene according to an embodiment of the present disclosure (taking PVDF and NMP as an example). As shown in FIG. 1, the graphene, PVDF, and NMP are mixed and stirred, and a resulting slurry is made into a graphene electrolytic electrode plate, and an aqueous potassium bicarbonate solution is used as an electrolyte solution under an alternating current (0.01 Hz to 0.02 Hz, 30 mA·cm⁻² to 50 mA·cm⁻²) and conducted electrolysis to obtain the edge-oxidized single-layer graphene.

In the present disclosure, the degree of oxidation of the single-layer graphene is adjusted by controlling the conditions of electrolytic oxidation, such that the oxidation of the single-layer graphene occurs only at the edge of the graphene; and no oxidation occurs on the plane to generate defects, such that the graphene has a complete two-dimensional honeycomb structure.

The technical solutions of the present disclosure will be clearly and completely described below with reference to the examples of the present disclosure. Obviously, the described examples are merely some rather than all of the examples of the present disclosure. All other examples that can be obtained by a person of ordinary skill in the art based on the examples of the present disclosure without creative efforts shall fall within the scope of the present disclosure.

In the following examples, an electrochemical workstation used was CHI660E, and both positive and negative electrodes were a graphene electrode.

### Example 1

3 g of a single-layer graphene powder and PVDF (which accounted for 9 wt.% of the mass of the single-layer graphene) were dissolved in 5 mL of NMP and mixed evenly. A resulting slurry was poured into a cubic mold with length, width, and height of 25 mm, 20 mm, and 2 mm, respectively, and then dried and solidified to obtain a graphene electrolytic electrode plate.

The graphene electrolytic electrode plate was placed in an electrolytic cell, and an aqueous potassium bicarbonate solution with a concentration of 0.2 mol·mL⁻¹ was added thereto. Positive and negative electrodes of an electrochemical workstation were connected to the graphene electrolytic electrode plate, respectively, and an alternating current of 41.6 mA·cm⁻² and 0.017 Hz was applied. A resulting mixture was subjected to electrolysis for 60 s. A solution obtained after the electrolysis was dialyzed in deionized water until a resulting aqueous solution was electrically neutral, centrifuged at 8,500 rpm for 3 min, and filtered. A resulting black graphene aqueous dispersion was concentrated and freeze-dried to obtain a nanosheet of an edge-oxidized single-layer graphene.

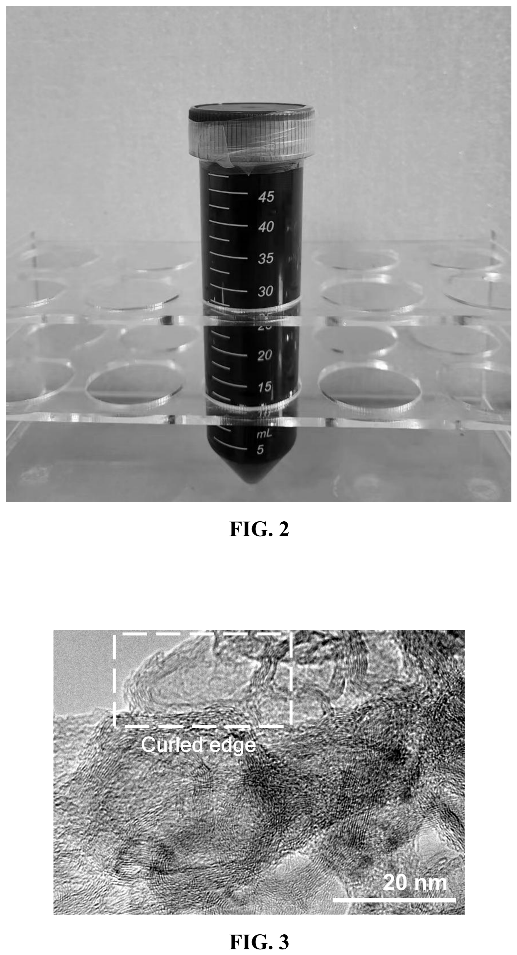

FIG. 2 shows a photograph of the aqueous dispersion of the edge-oxidized single-layer graphene obtained before concentration in Example 1. As shown in FIG. 2, the single-layer graphene nanosheets are uniformly distributed in the aqueous solution without forming a concentration difference distribution and without precipitation, proving that the edge-oxidized single-layer graphene has excellent dispersibility in the aqueous solution system.

FIG. 3 shows a TEM image of the edge-oxidized single-layer graphene prepared in Example 1. As shown in FIG. 3, the graphene edge curles due to the introduction of oxygen-containing functional groups such as hydroxyl, carbonyl, and carboxyl groups, which generates hydrogen bonds. This indicates that oxygen-containing functional groups are introduced into the edge, and their size distribution is at 20 nm to 100 nm.

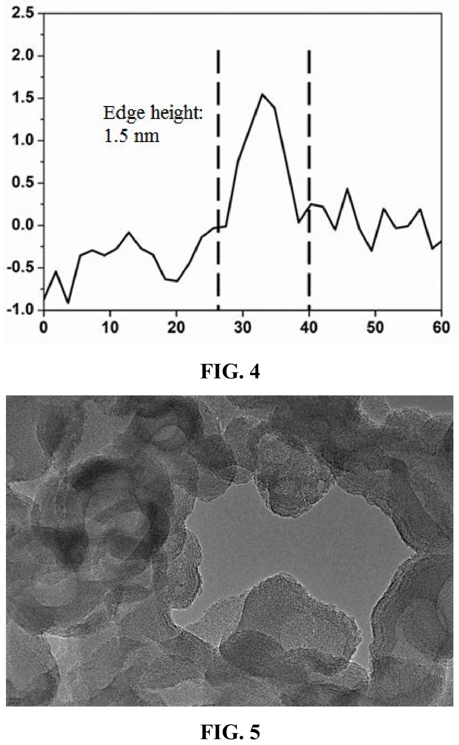

FIG. 4 is a graph showing the atomic force microscope measurement of the edge thickness of the edge-oxidized single-layer graphene prepared in Example 1. the edge-oxidized single-layer graphene has a height of 1.5 nm as shown in FIG. 4, proving that it is a single-layer graphene-like material that has been electrolytically treated.

### Comparative Example 1

3 g of a single-layer graphene powder and PVDF (which accounted for 9 wt.% of the mass of the single-layer graphene) were dissolved in 5 mL of NMP and mixed evenly. A resulting slurry was poured into a cubic mold with length, width, and height of 25 mm, 20 mm, and 2 mm, respectively, and then dried and solidified to obtain a graphene electrolytic electrode plate.

The graphene electrolytic electrode plate was placed in an electrolytic cell, and an aqueous potassium bicarbonate solution with a concentration of 0.2 mol·mL⁻¹ was added thereto. Positive and negative electrodes of an electrochemical workstation were connected to the graphene electrolytic electrode plate, respectively, and an alternating current of 50 mA cm⁻² and 0.017 Hz was applied. A resulting mixture was subjected to electrolysis for 60 s. A solution obtained after the electrolysis was dialyzed in deionized water until a resulting aqueous solution was electrically neutral, centrifuged at 8,500 rpm for 3 min, and filtered. A resulting black graphene aqueous dispersion was concentrated and freeze-dried to obtain graphene oxide.

FIG. 5 shows a TEM image of the graphene oxide prepared by high-current electrolysis of graphene in Comparative Example 1. As shown in FIG. 5, unlike the case in Example 1 where a low current is applied for electrolysis such that only the edges of the graphene are oxidized and curled, the graphene oxidized in Comparative Example 1 shows block-like shedding and agglomeration after the current intensity is increased, and no edge curling could be observed in the TEM. This indicates that the degree of oxidation has spread in the plane, showing interlayer stacking, proving that the method for preparing the present disclosure could achieve control of the degree of oxidation of the graphene.

The above description of examples is merely provided to help understand the method of the present disclosure and the core idea thereof. It should be noted that several improvements and modifications may be made by a person of ordinary skill in the art without departing from the principle of the present disclosure, and these improvements and modifications should also fall within the scope of the present disclosure. Various amendments to these embodiments are apparent to those of professional skill in the art, and the general principles defined herein may be implemented in other embodiments without departing from the spirit or scope of the present disclosure. Thus, the present disclosure is not limited to the examples shown herein but falls within the widest scope consistent with the principles and novel features disclosed herein.

## Claims

1. A method for preparing an edge-oxidized single-layer graphene, comprising:
mixing a single-layer graphene, a binder, and a dispersant, and drying a resulting slurry to obtain an electrode plate; and
subjecting the electrode plate to electrolytic oxidation in an electrolytic cell to obtain the edge-oxidized single-layer graphene; wherein
the electrolytic oxidation is conducted under an ultra-low frequency alternating current having a frequency of 0.01 Hz to 0.02 Hz; and
the electrolytic oxidation is conducted at a current density of 30 mA·cm⁻² to 50 mA·cm⁻² for 50 s to 100 s.

2. The method of claim 1, wherein the binder is one or more selected from the group consisting of polyvinylidene fluoride (PVDF), naphthol, sodium alginate, styrene-butadiene rubber (SBR), and polyacrylic acid (PAA).

3. The method of claim 1, wherein the dispersant comprises one or more selected from the group consisting of water, a polyethylene-propylene polymer, N-methylpyrrolidone (NMP), methanol, ethanol, ethylene glycol, propanol, methyl ether, ethyl ether, dimethyl carbonate (DMC), propylene carbonate (PC), diethyl carbonate (DEC), ethylene carbonate (EC), ethyl methyl carbonate, 2-(2-butoxyethoxy)ethyl acetate, butyl carbitol, diethylene glycol butylether acetate, 2,2,4-trimethyl-1,3-pentanediol monoisobutyrate, ethylene glycol acetic acid acetate, and terpineol.

4. The method of claim 1 or 3, wherein a dosage ratio of the single-layer graphene to the dispersant is in a range of (2-5) mg: (2-5) mL.

5. The method of claim 1 or 2, wherein a mass of the binder is 7 wt.% to 15 wt.% of a mass of the single-layer graphene.

6. The method of claim 1, wherein an electrolyte in an electrolyte solution for the electrolytic oxidation comprises one or more selected from the group consisting of potassium bicarbonate, potassium hydroxide, ammonium acetate, ammonium sulfate, lithium hexafluorophosphate, lithium hexafluoroborate, lithium hexafluoroarsenate, lithium bis(trifluoromethanesulphonyl)imide, and sodium hexafluorophosphate.

7. The method of claim 6, wherein a concentration of the electrolyte in the electrolyte solution is in a range of 0.05 mol·L⁻¹ to 0.5 mol·L⁻¹.

8. The method of claim 1, wherein the ultra-low frequency alternating current has the frequency of 0.017 Hz; and the electrolytic oxidation is conducted at the current density of 41.6 mA·cm⁻².

9. The method of claim 1, 6, 7, or 8, further comprising: after the electrolytic oxidation is completed, adding a product obtained from the electrolytic oxidation to deionized water, subjecting a resulting mixture to dialysis until a resulting aqueous solution is neutral, then to centrifugal separation, and subjecting a resulting upper layer solution to filtration, concentration, and freeze-drying in sequence to obtain a nanosheet of the edge-oxidized single-layer graphene.

10. The method of claim 9, wherein the centrifugal separation is conducted at 8,500 rpm for 3 min.

11. An edge-oxidized single-layer graphene prepared by the method of any one of claims 1 to 10, wherein the edge-oxidized single-layer graphene has a planar structure with a curled edge.

12. The edge-oxidized single-layer graphene of claim 11, wherein the edge-oxidized single-layer graphene has a size of 20 nm to 100 nm and an edge height of 1.5 nm.
